# EUROPEAN PATENT SPECIFICATION

(11) **EP 2 863 617 B1**
(45) Date of publication and mention of the grant of the patent: **03.02.2021**
(21) Application number: 13834023.7
(22) Date of filing: 05.02.2013
(51) Int. Cl.: H04M 3/51

(54) **CLOUD ATTENDANT PROCESSING METHOD, DEVICE AND SYSTEM**
VERARBEITUNGSVERFAHREN, VORRICHTUNG UND SYSTEM FÜR CLOUD-TEILNEHMER
PROCÉDÉ, APPAREIL ET SYSTÈME DE TRAITEMENT POUR LES UTILISATEURS DE SERVICES EN NUAGE

(30) Priority: 31.08.2012 CN 201210318671
(43) Date of publication of application: 22.04.2015
(73) Proprietor: Huawei Technologies Co., Ltd., Longgang District Shenzhen, Guangdong 518129 (CN)
(72) Inventor: FENG, Lijun, Shenzhen Guangdong 518129 (CN)
(74) Representative: Thun, Clemens
(86) International application number: PCT/CN2013/071361
(87) International publication number: WO 2014/032414

(56) References cited:
- EP-A2- 1 237 349
- CN-A- 101 478 612
- CN-A- 101 631 171
- CN-A- 102 377 776
- JP-A- 2012 049 756
- US-A1- 2006 029 206
- US-A1- 2011 026 517
- Cisco Systems, Inc: "Cisco Unified Contact Center Express Solution Reference NetworkDesign Release 9.0(1)", , 6 July 2012 (2012-07-06), XP002739804, Retrieved from the Internet: URL:http://www.cisco.com/c/en/us/td/docs/v oice_ip_comm/cust_contact/contact_center/c rs/express_9_0/design/UCCX_BK_UD5B347F_00_ uccx-solution-reference-network-design.pdf [retrieved on 2015-05-20]

## Description

### TECHNICAL FIELD

The present invention relates to the communications field, and in particular, to a cloud agent processing method, device, and system.

### BACKGROUND

With the rapid development of computer telephone integration technologies, a function of making a telephone call between computers by using a network is implemented. In addition, with the development of cloud computing technologies, reducing a total cost of ownership of a call center by using a virtualization technology has become a new market trend. A cloud agent provides a remote desktop service for a user based on a virtual desktop infrastructure (Virtual Desktop Infrastructure, VDI) technology.

In a practical application, an attendant generally sends a function instruction corresponding to an agent function key to an agent call center by triggering the agent function key provided on an agent phone, so as to trigger the agent call center to send a state change notification to an agent server after processing the function instruction, so that the agent server is converted to a function state corresponding to the function instruction. Communication between the agent phone that integrates the function key and the agent call center adopts a tight coupling mode, and therefore, in a case that the agent call center needs to be replaced due to incapability of meeting a service demand and the like, options for a model range of the agent call center or the agent phone are restricted. In this case, an exact match between the agent call center and the agent phone cannot be ensured, and the objective of implementing function association of the agent phone and the agent server by using the agent call center as an intermediate station cannot be achieved, which thereby increases implementation costs and subsequent maintenance costs.

For example, US 2006/029206 A1 refers to a system for integrating a contact center, an agent station, and a customer relation management server for communication including a network adapter node having port connection to the contact center, the agent station, and the customer relation management server, and one or more dynamic states running on the network adapter mode, wherein the one or more states described represent current agent activity and presence attributes according to model. In preferred application, the customer relation management server is adapted to deliver data and or services or notification of availability thereof to the agent station based on the current state information for one or more events active or in queue for the agent station.

Further, EP 1 237 349 A2 refers to a communications network environment, a distributed software application for monitoring terminal and device capabilities of agents operating on the network and rendering data results of the monitoring to subscribing routing applications. The software application comprises a first portion of the software for collecting and sending data about terminal and device capabilities of the target agents and a second portion of the software for receiving the capability data and for presenting the data in usable form to the subscribing routing applications.

Further, US 2011/026517 A1 refers to an adaptation proxy, a computer system, a computer-implemented method, and a computer program product for enabling presence and remote call control services between client devices served by different SIP servers. In one aspect, the adaptation proxy integrable into a computer system for enabling presence and remote call control services between client devices served by different SIP servers may comprise an SIP adaptor operable to transform and to transport SIP messages between the client devices served by the different SIP servers. A CSTA gateway is operable to convert a CSTA event supported by a second SIP server of the SIP servers into a format supported by a first SIP server of the SIP servers, wherein the CSTA event independently operates over the SIP messages to communicate remote control commands, and a presence integrator operable to notify a change to a call state of a first client device from the client devices served by the first SIP server to the second SIP server after having performed a mapping between the changed call state and a corresponding presence state of a second client device from the client devices served by the second SIP server so as to integrate presence information of the first client device and the second client device.

For example, XP002739804 describes the components to build a Cisco Unified CCX system.

### SUMMARY

Embodiments of the present invention provide a cloud agent processing method and system, which resolve a problem of high maintenance costs arising from replacement of a call center that cannot meet a service demand due to a problem of tight coupling between an agent phone, an agent call center, and an agent server in the prior art.

In a first aspect a cloud agent processing method performed by a system comprising an agent server, an agent call center and an agent terminal is provided, the method comprising:
- receiving, by the agent server, a key operation instruction that is triggered by a user on an integrated key of the agent terminal;
- generating, by the agent server, an agent function operating request corresponding to the key operation instruction;
- sending, by the agent server, the agent function operating request to the agent call center;
- processing, by the agent call center, the agent function operating request, thereby triggering the agent call center to send an agent function processing result to the agent server, and sending, by the agent call center, the agent function processing result to the agent server;
- receiving, by the agent server, the agent function processing result sent by the agent call center;
- determining, by the agent sever, whether the agent function processing result indicates a success, and if ves, , setting, by the agent server, a function state of the agent server, so that the function state of the agent server corresponds to the agent function operating request;
- sending, by the agent server, a state setting indication to the agent terminal, thereby triggering the agent terminal to set a state of a key indicator of the integrated key of the agent terminal, wherein the sending, by the agent server, the state setting indication to the agent terminal, thereby triggering the agent terminal to set the state of the key indicator of the integrated key of the agent terminal comprises:
   ∘ sending, by the agent server, state setting information of the key indicator to the agent terminal;
- setting, by the agent terminal, the state of the key indicator of the integrated key of the agent terminal.

In a second aspect a system comprising an agent server, an agent call center and an agent terminal is provided, wherein the system is configured and intended to perform any of the above methods.

In the embodiments of the present invention, an agent server generates an agent function operating request; receives, after an agent call center processes the agent function operating request, an agent function processing result sent by the agent call center; if the agent function processing result is successful, sets a function state of the agent server so that the function state of the agent server corresponds to the agent function operating request; and sends a state setting indication to an agent terminal, so that the agent terminal sets a state of a key indicator of an integrated key of the agent terminal. In the technical solutions, function association and state synchronization between the agent terminal and the agent server are implemented only by using the agent terminal, which avoids limited device options caused by tight coupling between an agent phone and the agent call center, and further avoids problems of high implementation costs and subsequent high maintenance costs. In addition, function association between the agent terminal and the agent server can be quickly and conveniently implemented by triggering the integrated key provided on the agent terminal, and therefore costs for integrating function keys on the agent phone are reduced.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG 1 is a schematic flowchart of a cloud agent processing method according to Embodiment 1 of the present invention;
FIG. 2 is a schematic flowchart of another cloud agent processing method according to Embodiment 1 of the present invention;
FIG. 3 is a schematic flowchart of a cloud agent processing method according to Embodiment 2 of the present invention;
FIG. 4 is a schematic flowchart of another cloud agent processing method according to Embodiment 2 of the present invention;
FIG. 5 is a structural diagram of an agent server according to Embodiment 3 of the present invention;
FIG. 6 is a structural diagram of another agent server according to Embodiment 3 of the present invention;
FIG. 7 is a structural diagram of an agent terminal according to Embodiment 4 of the present invention;
FIG. 8 is a structural diagram of another agent terminal according to Embodiment 4 of the present invention;
FIG. 9 is a structural diagram of still another agent terminal according to Embodiment 4 of the present invention; and
FIG. 10 is a schematic structural diagram of an agent processing system according to Embodiment 5 of the present invention.

### DESCRIPTION OF EMBODIMENTS

The following describes the 'embodiments' as being exemplary embodiments, that are solely described for understanding the invention. The scope of the invention is entirely defined by the appended claims.

### Embodiment 1

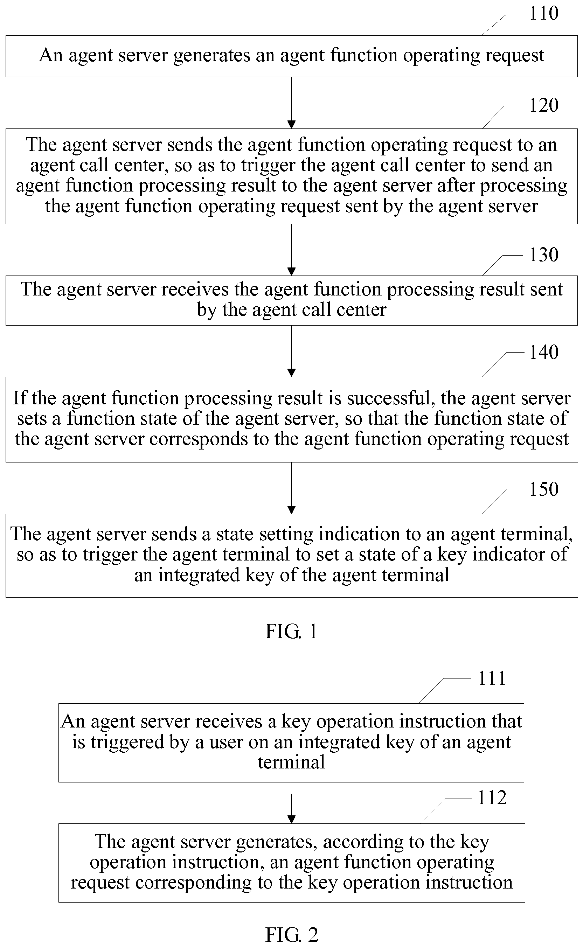

Referring to FIG. 1, FIG. 1 is a schematic flowchart of a cloud agent processing method according to Embodiment 1 of the present invention. In this embodiment, the cloud agent processing method provided by this embodiment is described in detail from the perspective of an agent server. As shown in FIG. 1, the cloud agent processing method may include the following steps:
110: An agent server generates an agent function operating request.
120: The agent server sends the agent function operating request to an agent call center, so as to trigger the agent call center to send, after processing the agent function operating request sent by the agent server, an agent function processing result to the agent server.
130: The agent server receives the agent function processing result sent by the agent call center. If the agent function processing result is successful, step 140 and step 150 are executed in sequence. 140: The agent server sets a function state of the agent server, so that the function state of the agent server corresponds to the agent function operating request.
150: The agent server sends a state setting indication to an agent terminal, so as to trigger the agent terminal to set a state of a key indicator of an integrated key of the agent terminal.

In this embodiment, the agent server defines in advance that when the key indicator emits green light, it indicates that a function corresponding to the integrated key of the agent terminal has taken effect, and then the state setting indication is used to instruct the agent terminal to set that the key indicator corresponding to the integrated key emits green light.

In this embodiment, function association and state synchronization between an agent terminal and an agent server are implemented only by using the agent terminal, which efficiently implements that the agent server sends a state setting indication to the agent terminal, so that the agent terminal sets a key state of an integrated key of the agent terminal. As a result, limited device options caused by tight coupling between an agent phone and an agent call center are avoided, which further avoids high implementation costs and subsequent high maintenance costs.

As an optional implementation manner, the generating, by an agent server, an agent function operating request includes:
detecting an operation by a user on an agent desktop, and generating the agent function operating request according to the operation.

As an optional implementation manner, before the sending, by the agent server, a state setting indication to an agent terminal, so as to trigger the agent terminal to set a state of a key indicator of an integrated key of the agent terminal, the cloud agent processing method further includes:
mapping, by the agent server according to the agent function operating request, to the integrated key, corresponding to the agent function operating request, of the agent terminal.

Referring to FIG. 2, FIG. 2 is a schematic flowchart of another cloud agent processing method according to Embodiment 1 of the present invention. As shown in FIG. 2, before executing step 110, that is, before the generating, by an agent server, an agent function operating request, the cloud agent processing method further includes the following steps:
111: The agent server receives a key operation instruction that is triggered by the user on the integrated key of the agent terminal.
112: The agent server generates, according to the key operation instruction, an agent function operating request corresponding to the key operation instruction.

This implementation manner is another implementation solution to generating the agent function operating request, that is, the key operation instruction may be triggered by operating a key by the user on the integrated key of the agent terminal, and the agent server generates, according to the obtained key operation instruction, the agent function operating request matching the key operation instruction. In this implementation manner, a function of interaction between the agent terminal and the agent server is improved, that is, the agent function operating request can not only be obtained by operating the agent desktop by the user, and a function of obtaining the agent function operating request can also be implemented by triggering the integrated key on the agent terminal, which provides the user with more options and better experience.

As an optional implementation manner, the agent server may receive key indicator information that is triggered by the user on the integrated key of the agent terminal, so as to acquire a state of the key indicator of the integrated key before the integrated key of the agent terminal is triggered.

The key indicator information is used to indicate the state of the key indicator, for example, when the key indicator information is "red", it indicates that the key indicator emits red light before an integrated key corresponding to the key indicator is triggered; for another example, when the key indicator information is "off", it indicates that the key indicator is in an off state before the integrated key corresponding to the key indicator is triggered. The state of the key indicator can be freely defined, and an implementation form does not constitute a limitation to the present invention. In this embodiment, that the key indicator information is "red" is used to indicate the state of the key indicator corresponding to the integrated key before the integrated key corresponding to the key indicator information is triggered. It is defined in advance in the agent server that when the key indicator emits red light, it indicates that a function corresponding to the integrated key of the agent terminal does not take effect; and it is defined in advance that when the key indicator emits green light, it indicates that the function corresponding to the integrated key of the agent terminal has taken effect.

As an optional implementation manner, the sending, by the agent server, a state setting indication to an agent terminal, so as to trigger the agent terminal to set a state of a key indicator of an integrated key of the agent terminal includes:
sending, by the agent server, state setting information of the key indicator to the agent terminal, so that the agent terminal sets the state of the key indicator of the integrated key of the agent terminal.

In this embodiment, the state setting information of the key indicator is used to instruct an update of the state of the key indicator to emitting green light, which indicates that the function of the integrated key corresponding to the key indicator has currently taken effect, and that functions of the agent terminal and the agent server are in a synchronization state.

As an optional implementation manner, the state setting information of the key indicator may specifically include a sequence number of a key and the state of the key indicator, and then the state setting information of the key indicator is specifically used to instruct the agent terminal to set a state of the key indicator corresponding to the sequence number of the key to a state indicating that the function of the key has taken effect, that is, instructing an update of the state of the key indicator to emitting green light in this embodiment.

### Embodiment 2

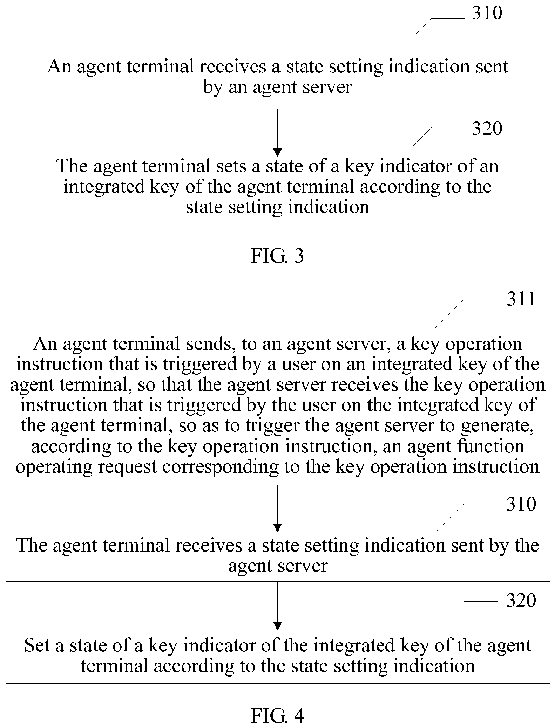

Referring to FIG. 3, FIG. 3 is a schematic flowchart of a cloud agent processing method according to Embodiment 2 of the present invention. In this embodiment, the cloud agent processing method provided by this embodiment is described in detail from the perspective of an agent terminal. As shown in FIG. 3, the cloud agent processing method may include the following steps:
310: An agent terminal receives a state setting indication sent by an agent server.
320: The agent terminal sets a state of a key indicator of an integrated key of the agent terminal according to the state setting indication.

The agent server generates an agent function operating request; sends the agent function operating request to an agent call center, so as to trigger the agent call center to send, after processing the agent function operating request, an agent function processing result to the agent server; if the agent function processing result is successful, triggers the agent server to set a function state of the agent server, so that the function state of the agent server corresponds to the agent function operating request; and sends the state setting indication to the agent terminal.

In this embodiment, the agent server defines in advance that when the key indicator is in a light emitting state, it indicates that a function corresponding to the integrated key of the agent terminal has taken effect, and then the state setting indication is used to instruct the agent terminal to set that the key indicator corresponding to the integrated key emits light.

In this embodiment, function association and state synchronization between an agent terminal and an agent server are implemented only by using the agent terminal, which efficiently implements that the agent server sends a state setting indication to the agent terminal, so that the agent terminal sets a key state of an integrated key of the agent terminal. As a result, limited device options caused by tight coupling between an agent phone and an agent call center are avoided, which further avoids high implementation costs and subsequent high maintenance costs.

Referring to FIG. 4, FIG. 4 is a schematic flowchart of another cloud agent processing method according to Embodiment 2 of the present invention. As shown in FIG. 4, as an optional implementation manner, before executing step 310, that is, before the receiving, by an agent terminal, a state setting indication sent by an agent server, the cloud agent processing method further includes the following step:
311: The agent terminal sends the agent server a key operation instruction that is triggered by a user on the integrated key of the agent terminal, so that the agent server receives the key operation instruction that is triggered by the user on the integrated key of the agent terminal, so as to trigger the agent server to generate, according to the key operation instruction, an agent function operating request corresponding to the key operation instruction.

This implementation manner is another implementation solution to generating the agent function operating request, that is, the key operation instruction may be triggered by operating a key by the user on the integrated key of the agent terminal, and the agent server is triggered to generate, according to the obtained key operation instruction, the agent function operating request matching the key operation instruction. In this implementation manner, a function of interaction between the agent terminal and the agent server is improved, that is, the agent function operating request can not only be obtained by operating an agent desktop by a user, and a function of obtaining the agent function operating request can also be implemented by triggering the integrated key on the agent terminal, which provides the user with more options and better experience.

As an optional implementation manner, the cloud agent processing method further includes the following step:
sending, by the agent terminal to the agent server, key indicator information that is triggered by the user on the integrated key of the agent terminal, so that the agent server acquires a state of the key indicator of the integrated key before the integrated key of the agent terminal is triggered.

The key indicator information is used to indicate the state of the key indicator, for example, when the key indicator information is "red", it indicates that the key indicator emits red light before an integrated key corresponding to the key indicator is triggered; for another example, when the key indicator information is "off", it indicates that the key indicator is in an off state before the integrated key corresponding to the key indicator is triggered. The state of the key indicator can be freely defined, and an implementation form does not constitute a limitation to the present invention. In this embodiment, that the key indicator information is "off" is used to indicate the state of the key indicator corresponding to the key indicator information before the integrated key corresponding to the key indicator information is triggered. It is defined in advance in the agent server that when the key indicator is in an off state, it indicates that a function corresponding to the integrated key of the agent terminal does not take effect; and it is defined in advance that when the key indicator is in a light emitting state, it indicates that the function corresponding to the integrated key of the agent terminal has taken effect.

As an optional implementation manner, the setting, by the agent terminal, a state of a key indicator of an integrated key of the agent terminal according to the state setting indication includes:
receiving, by the agent terminal, state setting information of the key indicator sent by the agent server; and
setting, by the agent terminal, the state of the key indicator of the integrated key of the agent terminal according to the state setting information of the key indicator.

In this embodiment, the state setting information of the key indicator is used to instruct an update of the state of the key indicator to the light emitting state, which indicates that the function of the integrated key currently corresponding to the key indicator has taken effect, and that functions of the agent terminal and the agent server are in a synchronization state.

As an optional implementation manner, the state setting information of the key indicator may specifically include a sequence number of a key and the state of the key indicator, and then the state setting information of the key indicator is specifically used to instruct the agent terminal to set a state of the key indicator corresponding to the sequence number of the key to a state indicating that the function of the key takes effect, that is, instructing an update of the state of the key indicator to the light emitting state in this embodiment.

### Embodiment 3

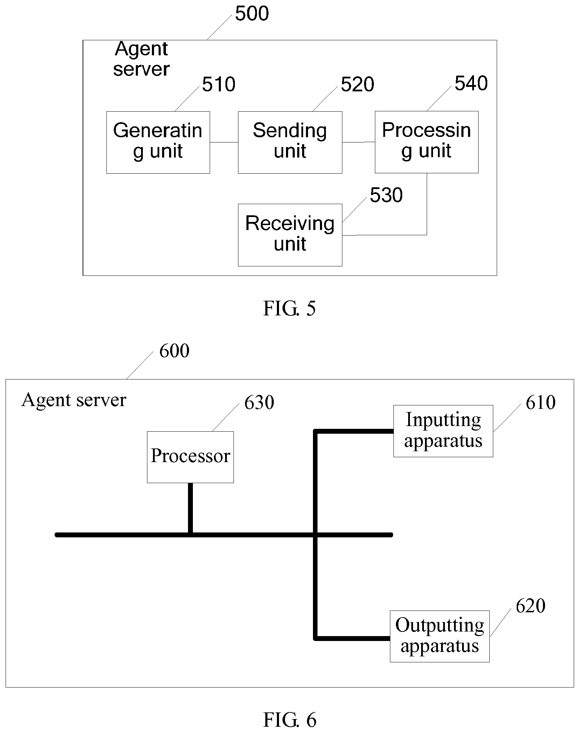

Referring to FIG. 5, FIG. 5 is a structural diagram of an agent server according to Embodiment 3 of the present invention. As shown in FIG. 5, an agent server 500 provided by this embodiment includes: a generating unit 510, a sending unit 520, a receiving unit 530, and a processing unit 540. The generating unit 510 is configured to generate an agent function operating request.

The sending unit 520 is configured to send the agent function operating request to an agent call center, so as to trigger the agent call center to send, after processing the agent function operating request, an agent function processing result to the agent server 500.

The receiving unit 530 is configured to receive the agent function processing result sent by the agent call center.

The processing unit 540 is configured to set a function state of the agent server according to that the agent function processing result received by the receiving unit is successful, so that the function state of the agent server corresponds to the agent function operating request.

The processing unit 540 is further configured to send a state setting indication to an agent terminal, so as to trigger the agent terminal to set a state of a key indicator of an integrated key of the agent terminal.

In this embodiment, the agent server 500 defines in advance that when the key indicator emits green light, it indicates that a function corresponding to the integrated key of the agent terminal has taken effect, and then the state setting indication is used to instruct the agent terminal to set that the key indicator corresponding to the integrated key emits green light.

In this embodiment, function association and state synchronization between an agent terminal and an agent server 500 are implemented only by using the agent terminal, which efficiently implements that the agent server 500 sends a state setting indication to the agent terminal, so that the agent terminal sets a key state of an integrated key of the agent terminal. As a result, limited device options caused by tight coupling between an agent phone and an agent call center are avoided, which further avoids high implementation costs and subsequent high maintenance costs.

As an optional implementation manner, the generating unit is specifically configured to detect an operation by a user on an agent desktop, and generate the agent function operating request according to the operation.

As an optional implementation manner, the agent server further includes a mapping unit, configured to map, according to the agent function operating request, to the integrated key corresponding to the agent function operating request, of the agent terminal.

As an optional implementation manner, the receiving unit is further configured to receive a key operation instruction that is triggered by the user on the integrated key of the agent terminal; and the generating unit is specifically configured to generate, according to the key operation instruction, an agent function operating request corresponding to the key operation instruction.

This implementation manner is another implementation solution to generating the agent function operating request, that is, the key operation instruction may be triggered by operating a key by the user on the integrated key of the agent terminal, and the agent server is triggered to generate, according to an obtained key operation instruction, the agent function operating request matching the key operation instruction. In this implementation manner, a function of interaction between the agent terminal and the agent server is improved, that is, the agent function operating request can not only be obtained by operating the agent desktop by the user, and a function of obtaining the agent function operating request can also be implemented by triggering the integrated key on the agent terminal, which provides the user with more options and better experience.

As an optional implementation manner, the generating unit is further configured to receive key indicator information that is triggered by the user on the integrated key of the agent terminal, so as to acquire a state of the key indicator of the integrated key before the integrated key of the agent terminal is triggered.

The key indicator information is used to indicate the state of the key indicator, for example, when the key indicator information is "red", it indicates that the key indicator emits red light before an integrated key corresponding to the key indicator is triggered; for another example, when the key indicator information is "off", it indicates that the key indicator is in an off state before the integrated key corresponding to the key indicator is triggered. The state of the key indicator can be freely defined, and an implementation form does not constitute a limitation to the present invention. In this embodiment, that the key indicator information is "red" is used to indicate the state of the key indicator corresponding to the key indicator information before the integrated key corresponding to the key indicator information is triggered. It is defined in advance in the agent server that when the key indicator emits red light, it indicates that a function corresponding to the integrated key of the agent terminal does not take effect; and it is defined in advance that when the key indicator emits green light, it indicates that the function corresponding to the integrated key of the agent terminal has taken effect.

As an optional implementation manner, the processing unit is further configured to send state setting information of the key indicator to the agent terminal, so that the agent terminal sets the state of the key indicator of the integrated key of the agent terminal.

In this embodiment, the state setting information of the key indicator is used to instruct an update of the state of the key indicator to emitting green light, which indicates that the function of the integrated key currently corresponding to the key indicator has taken effect, and that functions of the agent terminal and the agent server are in a synchronization state.

As an optional implementation manner, the state setting information of the key indicator may specifically include a sequence number of a key and the state of the key indicator, and then the state setting information of the key indicator is specifically used to instruct the agent terminal to set a state of the key indicator corresponding to the sequence number of the key to a state indicating that the function of the key takes effect, that is, instructing an update of the state of the key indicator to a state of emitting green light in this embodiment.

As an optional implementation manner, referring to FIG. 6, FIG. 6 is a structural diagram of another agent terminal according to Embodiment 3 of the present invention. As shown in FIG. 6, an agent server 600 provided by this embodiment includes: an inputting apparatus 610, an outputting apparatus 620, and a processor 630 (the number of the processors 630 may be one or more, and FIG. 6 shows an example where one processor is used).

In some embodiments of the present invention, the inputting apparatus 610, the outputting apparatus 620, and the processor 630 may be connected by using a bus or in another manner. FIG. 6 shows an example where a bus is used for such a connection.

The processor 630 executes the following steps: sending an agent function operating request to an agent call center, so as to trigger the agent call center to send, after processing the agent function operating request, an agent function processing result to the agent server 600; if the agent function processing result is successful, setting a function state of the agent server 600, so that the function state of the agent server 600 corresponds to the agent function operating request; and sending a state setting indication to an agent terminal, so as to trigger the agent terminal to set a state of a key indicator of an integrated key of the agent terminal.

The inputting apparatus 610 is configured to generate the agent function operating request, and is further configured to receive the agent function processing result sent by the agent call center. The outputting apparatus 620 is configured to send the agent function operating request to the agent call center, so as to trigger the agent call center to send, after processing the agent function operating request, the agent function processing result to the agent server 600, and is configured to send the state setting indication to the agent terminal.

The agent server defines in advance that when the key indicator emits green light, it indicates that a function corresponding to the integrated key of the agent terminal has taken effect, and then the state setting indication is used to instruct the agent terminal to set that the key indicator corresponding to the integrated key emits green light.

As an optional implementation manner, the inputting apparatus is specifically configured to detect an operation by a user on an agent desktop, and generate the agent function operating request according to the operation.

As an optional implementation manner, the processor is further configured to map, according to the agent function operating request, to the integrated key, corresponding to the agent function operating request, of the agent terminal.

As an optional implementation manner, the inputting apparatus is specifically configured to receive a key operation instruction that is triggered by the user on the integrated key of the agent terminal; and the processor generates, according to the key operation instruction, an agent function operating request corresponding to the key operation instruction. The agent server further includes a storage apparatus, configured to store the agent function operating request corresponding to the key operation instruction.

As an optional implementation manner, the inputting apparatus is further configured to receive key indicator information that is triggered by the user on the integrated key of the agent terminal, so as to acquire a state of the key indicator of the integrated key before the integrated key of the agent terminal is triggered.

The key indicator information is used to indicate the state of the key indicator, for example, when the key indicator information is "red", it indicates that the key indicator emits red light before an integrated key corresponding to the key indicator is triggered; for another example, when the key indicator information is "off", it indicates that the key indicator is in an off state before the integrated key corresponding to the key indicator is triggered. The state of the key indicator can be freely defined, and an implementation form does not constitute a limitation to the present invention. In this embodiment, that the key indicator information is "red" is used to indicate the state of the key indicator corresponding to the key indicator information before the integrated key corresponding to the key indicator information is triggered. It is defined in advance in the agent server that when the key indicator emits red light, it indicates that a function corresponding to the integrated key of the agent terminal does not take effect; and it is defined in advance that when the key indicator emits green light, it indicates that the function corresponding to the integrated key of the agent terminal has taken effect.

As an optional implementation manner, the output apparatus is further configured to send state setting information of the key indicator to the agent terminal according to that the agent function processing result is successful, so that the agent terminal sets the state of the key indicator of the integrated key of the agent terminal; and the outputting apparatus is configured to output the state setting information of the key indicator to the agent terminal.

In this embodiment, the state setting information of the key indicator is used to indicate updating the state of the key indicator to emitting green light, which indicates that the function of the integrated key currently corresponding to the key indicator has taken effect, and that functions of the agent terminal and the agent server are in a synchronization state.

As an optional implementation manner, the state setting information of the key indicator may specifically include a sequence number of a key and the state of the key indicator, then the state setting information of the key indicator is specifically used to instruct the agent terminal to set a state of the key indicator corresponding to the sequence number of the key to a state indicating that the function of the key takes effect, that is, instructing an update of the state of the key indicator to a state of emitting green light in this embodiment.

### Embodiment 4

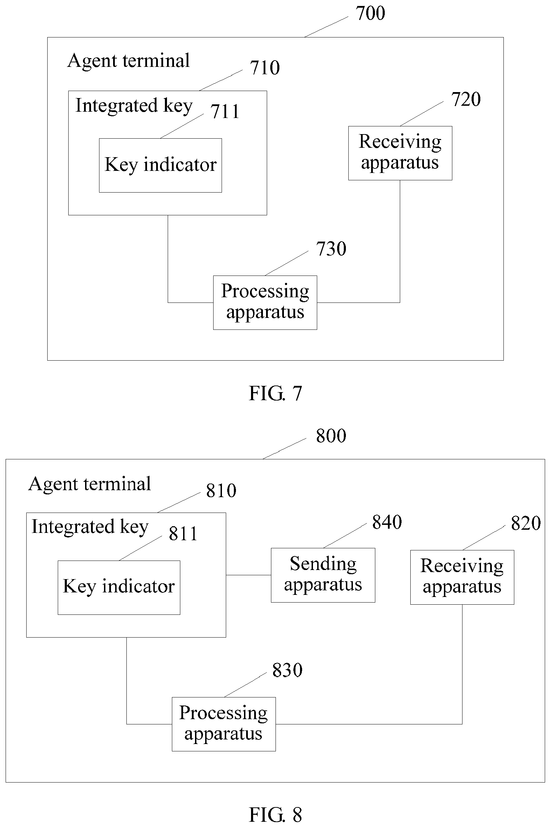

Referring to FIG. 7, FIG. 7 is a structural diagram of an agent terminal according to Embodiment 4 of the present invention. As shown in FIG. 7, an agent terminal 700 provided by this embodiment is provided with: an integrated key 710, a receiving apparatus 720, and a processing apparatus 730, where a corresponding key indicator 711 is provided on the integrated key 710.

The receiving apparatus 720 is configured to receive a state setting indication sent by an agent server.

The processing apparatus 730 is configured to set a state of the key indicator 711 of the integrated key 710 of the agent terminal 700 according to the state setting indication.

The agent server generates an agent function operating request; sends the agent function operating request to an agent call center, so as to trigger the agent call center to send, after processing the agent function operating request, an agent function processing result to the agent server; if the agent function processing result is successful, triggers the agent server to set a function state of the agent server, so that the function state of the agent server corresponds to the agent function operating request; and sends the state setting indication to the agent terminal 700.

In this embodiment, the agent server defines in advance that when the key indicator is in a light emitting state, it indicates that a function corresponding to the integrated key of the agent terminal 700 has taken effect, and then the state setting indication is used to instruct the agent terminal 700 to set that the key indicator corresponding to the integrated key emits light.

In this embodiment, function association and state synchronization between an agent terminal 700 and an agent server are implemented only by using the agent terminal 700, which efficiently implements that the agent server sends a state setting indication to the agent terminal 700, so that the agent terminal 700 sets a key state of an integrated key 710 of the agent terminal 700. As a result, occurrence of problems of limited device options caused by tight coupling between an agent phone and an agent call center are avoided, which further avoids high implementation costs and subsequent high maintenance costs.

Referring to FIG. 8, FIG. 8 is a structural diagram of another agent terminal according to Embodiment 4 of the present invention. As shown in FIG. 8, an agent terminal 800 provided by this embodiment is provided with: an integrated key 810, a receiving apparatus 820, a processing apparatus 830, and a sending apparatus 840, where a corresponding key indicator 811 is provided on the integrated key 810.

The integrated key 810 is configured to receive a key operation of a user, so as to trigger a key operation instruction.

The receiving apparatus 820 is configured to receive a state setting indication sent by an agent server.

The processing apparatus 830 is configured to set a state of the key indicator 811 of the integrated key of the agent terminal 800 according to the state setting indication.

The agent server generates an agent function operating request; sends the agent function operating request to an agent call center, so as to trigger the agent call center to send, after processing the agent function operating request, an agent function processing result to the agent server; if the agent function processing result is successful, triggers the agent server to set a function state of the agent server, so that the function state of the agent server corresponds to the agent function operating request; and sends the state setting indication to the agent terminal 800.

The sending apparatus 840 is configured to send the agent server the key operation instruction that is triggered by the user on the integrated key of the agent terminal 800, so that the agent server receives the key operation instruction that is triggered by the user on the integrated key of the agent terminal 800, so as to trigger the agent server to generate, according to the key operation instruction, an agent function operating request corresponding to the key operation instruction.

This implementation manner is another implementation solution to generating the agent function operating request, that is, the key operation instruction may be triggered by operating a key by the user on the integrated key of the agent terminal 800, and the agent server generates, according to the obtained key operation instruction, the agent function operating request matching the key operation instruction. In this implementation manner, a function of interaction between the agent terminal 800 and the agent server is improved, that is, the agent function operating request can not only be obtained by operating the agent desktop by the user, and a function of obtaining the agent function operating request can also be implemented by triggering the integrated key on the agent terminal 800, which provides the user with more options and better experience.

As an optional implementation manner, the sending apparatus is further configured to send, to the agent server, key indicator information that is triggered by the integrated key of the agent terminal, so that the agent server acquires a state of the key indicator of the integrated key before the integrated key of the agent terminal is triggered.

The key indicator information is used to indicate the state of the key indicator, for example, when the key indicator information is "red", it indicates that the key indicator emits red light before an integrated key corresponding to the key indicator is triggered; for another example, when the key indicator information is "off", it indicates that the key indicator is in an off state before the integrated key corresponding to the key indicator is triggered. The state of the key indicator can be freely defined, and an implementation form does not constitute a limitation to the present invention. In this embodiment, that the key indicator information is "off" is used to indicate the state of the key indicator corresponding to the key indicator information before the integrated key corresponding to the key indicator information is triggered. It is defined in advance in the agent server that when the key indicator is in an off state, it indicates that a function corresponding to the integrated key of the agent terminal does not take effect; and it is defined in advance that when the key indicator is in a light emitting state, it indicates that the function corresponding to the integrated key of the agent terminal has taken effect.

As an optional implementation manner, the receiving apparatus is further configured to receive state setting information of the key indicator sent by the agent server.

The processing apparatus is further configured to set the state of the key indicator of the integrated key of the agent terminal according to the state setting information of the key indicator.

In this embodiment, the state setting information of the key indicator is used to instruct an update of the state of the key indicator to the light emitting state, which indicates that the function of the integrated key currently corresponding to the key indicator has taken effect, and that functions of the agent terminal and the agent server are in a synchronization state.

As an optional implementation manner, the state setting information of the key indicator may specifically include a sequence number of a key and the state of the key indicator, and then the state setting information of the key indicator is specifically used to instruct the agent terminal to set a state of the key indicator corresponding to the sequence number of the key to a state indicating that the function of the key takes effect, that is, indicating updating the state of the key indicator to the light emitting state in this embodiment.

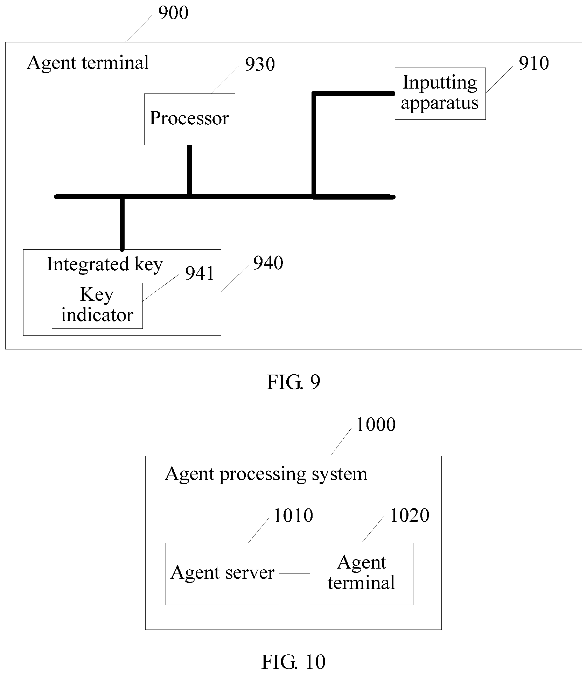

Referring to FIG. 9, FIG. 9 is a structural diagram of still another agent terminal according to Embodiment 4 of the present invention. As shown in FIG. 9, an agent terminal 900 provided by this embodiment includes: an inputting apparatus 910, a processor 930, and an integrated key 940, where a corresponding key indicator 941 is provided on the integrated key 940 (the number of the processors 930 may be one or more, and FIG. 9 shows an example where one processor is used).

In some embodiments of the present invention, the inputting apparatus 910 and the processor 930 may be connected by using a bus or in another manner. FIG. 9 shows an example where a bus is used for such a connection.

The inputting apparatus 910 is configured to receive a state setting indication sent by an agent server.

The processor 930 is configured to set a state of the key indicator 941 of the integrated key 940 of the agent terminal 900 according to the state setting indication.

The agent server generates an agent function operating request; sends the agent function operating request to an agent call center, so as to trigger the agent call center to send, after processing the agent function operating request, an agent function processing result to the agent server; if the agent function processing result is successful, triggers the agent server to set a function state of the agent server, so that the function state of the agent server corresponds to the agent function operating request; and sends the state setting indication to the agent terminal 900.

In this embodiment, the agent server defines in advance that when the key indicator is in a light emitting state, it indicates that a function corresponding to the integrated key of the agent terminal 900 has taken effect, and then the state setting indication is used to instruct the agent terminal 900 to set that the key indicator corresponding to the integrated key emits light.

As an optional implementation manner, the integrated key 940 is configured to receive a key operation of a user, so as to trigger a key operation instruction. The agent terminal further includes an outputting apparatus, configured to send the agent server the key operation instruction that is triggered by the user on the integrated key of the agent terminal, so that the agent server receives the key operation instruction that is triggered by the user on the integrated key of the agent terminal, so as to trigger the agent server to generate, according to the key operation instruction, an agent function operating request corresponding to the key operation instruction.

This implementation manner is another implementation solution to generating the agent function operating request, that is, the key operation instruction may be triggered by operating a key by the user on the integrated key of the agent terminal, and the agent server generates, according to the obtained key operation instruction, the agent function operating request matching the key operation instruction. In this implementation manner, a function of interaction between the agent terminal and the agent server is improved, that is, the agent function operating request can not only be obtained by operating the agent desktop by the user, and a function of obtaining the agent function operating request can also be implemented by triggering the integrated key on the agent terminal, which provides the user with more options and better experience.

As an optional implementation manner, the outputting apparatus is further configured to send, to the agent server, key indicator information that is triggered by the integrated key of the agent terminal, so that the agent server acquires a state of the key indicator of the integrated key before the integrated key of the agent terminal is triggered.

The key indicator information is used to indicate the state of the key indicator, for example, when the key indicator information is "red", it indicates that the key indicator emits red light before an integrated key corresponding to the key indicator is triggered; for another example, when the key indicator information is "off", it indicates that the key indicator is in an off state before the integrated key corresponding to the key indicator is triggered. The state of the key indicator can be freely defined, and an implementation form does not constitute a limitation to the present invention. In this embodiment, that the key indicator information is "off" is used to indicate the state of the key indicator corresponding to the key indicator information before the integrated key corresponding to the key indicator information is triggered. It is defined in advance in the agent server that when the key indicator is in an off state, it indicates that a function corresponding to the integrated key of the agent terminal does not take effect; and it is defined in advance that when the key indicator is in a light emitting state, it indicates that the function corresponding to the integrated key of the agent terminal has taken effect.

The agent terminal further includes a storage apparatus, configured to store the key indicator information.

As an optional implementation manner, the inputting apparatus is further configured to receive state setting information of the key indicator sent by the agent server.

The processor is further configured to set the state of the key indicator of the integrated key of the agent terminal according to the state setting information of the key indicator.

In this embodiment, the state setting information of the key indicator is used to instruct an update of the state of the key indicator to the light emitting state, which indicates that the function of the integrated key currently corresponding to the key indicator has taken effect, and that functions of the agent terminal and the agent server are in a synchronization state.

As an optional implementation manner, the state setting information of the key indicator may specifically include a sequence number of a key and the state of the key indicator, and then the state setting information of the key indicator is specifically used to instruct the agent terminal to set a state of the key indicator corresponding to the sequence number of the key to a state indicating that the function of the key takes effect, that is, indicating updating the state of the key indicator to the light emitting state in this embodiment.

Referring to FIG. 10, FIG. 10 is a schematic structural diagram of an agent processing system according to Embodiment 5 of the present invention. As shown in FIG. 10, an agent processing system 1000 provided by this embodiment includes an agent server 1010 and an agent terminal 1020.

The agent server 1010 is configured to generate an agent function operating request; and send the agent function operating request to an agent call center, so as to trigger the agent call center to send, after processing the agent function operating request, an agent function processing result to the agent server 1010; and is further configured to receive the agent function processing result sent by the agent call center; if the agent function processing result is successful, set a function state of the agent server, so that the function state of the agent server corresponds to the agent function operating request; and send a state setting indication to the agent terminal 1020, so as to trigger the agent terminal 1020 to set a state of a key indicator of an integrated key of the agent terminal 1020. The agent terminal 1020 is configured to receive the state setting indication sent by the agent server 1010, so as to set the state of the key indicator of the integrated key of the agent terminal 1020. An integrated key is provided on the agent terminal 1020 and a corresponding key indicator is provided on the integrated key. The agent server 1010 generates an agent function operating request; sends the agent function operating request to the agent call center, so as to trigger the agent call center to send, after processing the agent function operating request, an agent function processing result to the agent server 1010; if the agent function processing result is successful, sets a function state of the agent server, so that the function state of the agent server corresponds to the agent function operating request; and sends the state setting indication to the agent terminal 1020.

In this embodiment, the agent server defines in advance that when the key indicator is in a light emitting state, it indicates that a function corresponding to the integrated key of the agent terminal 1020 has taken effect, and then the state setting indication is used to instruct the agent terminal 1020 to set that the key indicator corresponding to the integrated key emits light.

As an optional implementation manner, the agent server is further configured to detect an operation by a user on an agent desktop, and generate the agent function operating request according to the operation.

As an optional implementation manner, the agent server is further configured to map, according to the agent function operating request, to the integrated key, corresponding to the agent function operating request, of the agent terminal.

As an optional implementation manner, the agent server is further configured to receive a key operation instruction that is triggered by the user on the integrated key of the agent terminal, so as to generate, according to the key operation instruction, an agent function operating request corresponding to the key operation instruction.

The agent terminal is further configured to send the agent server the key operation instruction that is triggered by the user on the integrated key of the agent terminal, so that the agent server receives the key operation instruction that is triggered by the user on the integrated key of the agent terminal, so as to trigger the agent server to generate, according to the key operation instruction, an agent function operating request corresponding to the key operation instruction.

As an optional implementation manner, the agent server is further configured to receive key indicator information that is triggered by the user on the integrated key of the agent terminal, so as to acquire a state of the key indicator of the integrated key before the integrated key of the agent terminal is triggered.

The key indicator information is used to indicate the state of the key indicator, for example, when the key indicator information is "red", it indicates that the key indicator emits red light before an integrated key corresponding to the key indicator is triggered; for another example, when the key indicator information is "off", it indicates that the key indicator is in an off state before the integrated key corresponding to the key indicator is triggered. The state of the key indicator can be freely defined, and an implementation form does not constitute a limitation to the present invention. In this embodiment, that the key indicator information is "off" is used to indicate the state of the key indicator corresponding to the key indicator information before the integrated key corresponding to the key indicator information is triggered. It is defined in advance in the agent server that when the key indicator is in an off state, it indicates that a function corresponding to the integrated key of the agent terminal does not take effect; and it is defined in advance that when the key indicator is in a light emitting state, it indicates that the function corresponding to the integrated key of the agent terminal has taken effect.

The agent terminal is further configured to send the agent server the key indicator information that is triggered by the user on the integrated key of the agent terminal, so that the agent server acquires a state of the key indicator of the integrated key before the integrated key of the agent terminal is triggered.

As an optional implementation manner, the agent server is further configured to send state setting information of the key indicator to the agent terminal.

The agent terminal is further configured to receive the state setting information of the key indicator sent by the agent server, so as to set the state of the key indicator of the integrated key of the agent terminal according to the state setting information of the key indicator.

In this embodiment, the state setting information of the key indicator is used to instruct an update of the state of the key indicator to the light emitting state, which indicates that the function of the integrated key currently corresponding to the key indicator has taken effect, and that functions of the agent terminal and the agent server are in a synchronization state.

As an optional implementation manner, the state setting information of the key indicator may specifically include a sequence number of a key and the state of the key indicator, and then the state setting information of the key indicator is specifically used to instruct the agent terminal to set a state of the key indicator corresponding to the sequence number of the key to a state indicating that the function of the key takes effect, that is, instructing an update of the state of the key indicator to the light emitting state in this embodiment.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), a random access memory (Random Access Memory, RAM for short), or the like.

## Claims

1. A cloud agent processing method performed by a system comprising an agent server, an agent call center and an agent terminal, the method comprising:
• receiving, by the agent server, a key operation instruction that is triggered by a user on an integrated key of the agent terminal (step 111);
• generating, by the agent server, an agent function operating request corresponding to the key operation instruction (step 110);
• sending, by the agent server, the agent function operating request to the agent call center (step 120);
• processing, by the agent call center, the agent function operating request, thereby triggering the agent call center to send an agent function processing result to the agent server, and sending, by the agent call center, the agent function processing result to the agent server;
• receiving, by the agent server, the agent function processing result sent by the agent call center (step 130);
• determining, by the agent sever, whether the agent function processing result indicates a success, and if yes, , setting, by the agent server, a function state of the agent server, so that the function state of the agent server corresponds to the agent function operating request (step 140);
• sending, by the agent server, a state setting indication to the agent terminal, thereby triggering the agent terminal to set a state of a key indicator of the integrated key of the agent terminal (step 150), wherein the sending, by the agent server, the state setting indication to the agent terminal, thereby triggering the agent terminal to set the state of the key indicator of the integrated key of the agent terminal comprises:
∘ sending, by the agent server, state setting information of the key indicator to the agent terminal;
• setting, by the agent terminal, the state of the key indicator of the integrated key of the agent terminal.

2. A system comprising an agent server, an agent call center and an agent terminal, wherein the system is configured and intended to perform the method according to claim 1.

## Patentansprüche

1. Cloud-Agenten-Verarbeitungsverfahren, das durch ein System durchgeführt wird, das einen Agentenserver, ein Agenten-Call-Center und ein Agentenendgerät umfasst, wobei das Verfahren Folgendes umfasst:
Empfangen, durch den Agentenserver, einer Schlüsseloperationsanweisung, die durch einen Benutzer an einem integrierten Schlüssel des Agentenendgeräts ausgelöst wird (Schritt 111);
Erzeugen, durch den Agentenserver, einer Agentenfunktionsoperationsanforderung, die der Schlüsseloperationsanweisung entspricht (Schritt 110);
Senden, durch den Agentenserver, der Agentenfunktionsoperationsanforderung zu dem Agenten-Call-Center (Schritt 120);
Verarbeiten, durch das Agenten-Call-Center, der Agentenfunktionsoperationsanforderung, wodurch das Agenten-Call-Center ausgelöst wird, ein Agentenfunktionsverarbeitungsergebnis zu dem Agentenserver zu senden, und Senden, durch das Agenten-Call-Center, des Agentenfunktionsverarbeitungsergebnisses zu dem Agentenserver;
Empfangen, durch den Agentenserver, des durch das Agenten-Call-Center gesendeten Agentenfunktionsverarbeitungsergebnisses (Schritt 130);
Bestimmen, durch den Agentenserver, ob das Agentenfunktionsverarbeitungsergebnis einen Erfolg angibt, und falls ja, Einstellen, durch den Agentenserver, eines Funktionszustands des Agentenservers, sodass der Funktionszustand des Agentenservers der Agentenfunktionsoperationsanforderung entspricht (Schritt 140);
Senden, durch den Agentenserver, einer Zustandseinstellungsindikation zu dem Agentenendgerät, wodurch das Agentenendgerät ausgelöst wird, einen Zustand eines Schlüsselindikators des integrierten Schlüssels des Agentenendgeräts einzustellen (Schritt 150),
wobei das Senden, durch den Agentenserver, der Zustandseinstellungsindikation zu dem Agentenendgerät, wodurch das Agentenendgerät ausgelöst wird, den Zustand des Schlüsselindikators des integrierten Schlüssels des Agentenendgeräts einzustellen, Folgendes umfasst:
Senden, durch den Agentenserver, von Zustandseinstellungsinformationen des Schlüsselindikators zu dem Agentenendgerät;
Einstellen, durch das Agentenendgerät, des Zustands des Schlüsselindikators des integrierten Schlüssels des Agentenendgeräts.

2. System, das einen Agentenserver, ein Agenten-Call-Center und ein Agentenendgerät umfasst, wobei das System zum Durchführen des Verfahrens nach Anspruch 1 konfiguriert und beabsichtigt ist.

## Revendications

1. Procédé de traitement d'agent en nuage exécuté par un système comprenant un serveur d'agent, un centre d'appel d'agent et un terminal d'agent, le procédé comprenant :
la réception, par le serveur d'agent, d'une instruction d'opération clé qui est déclenchée par un utilisateur sur une clé intégrée du terminal d'agent (étape 111) ;
la génération, par le serveur d'agent, d'une requête opérationnelle de fonction d'agent correspondant à l'instruction d'opération clé (étape 110) ;
l'envoi, par le serveur d'agent, de la requête opérationnelle de fonction d'agent au centre d'appel d'agent (étape 120) ;
le traitement, par le centre d'appel d'agent, de la requête opérationnelle de fonction d'agent, déclenchant ainsi l'envoi, par le centre d'appel d'agent, d'un résultat de traitement de fonction d'agent au serveur d'agent, et l'envoi, par le centre d'appel d'agent, du résultat de traitement de fonction d'agent au serveur d'agent ;
la réception, par le serveur d'agent, du résultat de traitement de fonction d'agent envoyé par le centre d'appel d'agent (étape 130) ;
la détermination, par le serveur d'agent, si le résultat de traitement de fonction d'agent indique ou non un succès, et si c'est le cas, régler, par le serveur d'agent, un état de fonction du serveur d'agent, de sorte que l'état de fonction du serveur d'agent corresponde à la requête opérationnelle de fonction d'agent (étape 140) ;
l'envoi, par le serveur d'agent, d'une indication de réglage d'état au terminal d'agent, déclenchant ainsi le réglage, par le terminal d'agent, d'un état d'un indicateur clé de la clé intégrée du terminal d'agent (étape 150),
dans lequel l'envoi, par le serveur d'agent, de l'indication de réglage d'état au terminal d'agent, déclenchant ainsi le réglage, par le terminal d'agent, de l'état de l'indicateur clé de la clé intégrée du terminal d'agent, comprend :
l'envoi, par le serveur d'agent, d'informations de réglage d'état de l'indicateur clé au terminal d'agent ;
le réglage, par le terminal d'agent, de l'état de l'indicateur clé de la clé intégrée du terminal d'agent.

2. Système comprenant un serveur d'agent, un centre d'appel d'agent et un terminal d'agent, dans lequel le système est configuré et prévu pour mettre en œuvre le procédé selon la revendication 1.
